# EUROPÄISCHE PATENTANMELDUNG

(11) **EP 3 650 689 A1**
(43) Veröffentlichungstag der Anmeldung: **13.05.2020**
(21) Anmeldenummer: 18204754.8
(22) Anmeldetag: 06.11.2018
(51) Int. Cl.: F03D 80/70, H02K 5/16

(54) **AUSGANGSMODUL MIT INTEGRIERTEM LAGERRING**

(71) Anmelder: ZF Friedrichshafen AG, 88046 Friedrichshafen (DE); VESTAS WIND SYSTEMS A/S, 8200 Aarhus N (DK)
(72) Erfinder: Smook, Warren, 3040 Huldenberg (BE)
(74) Vertreter: ZF Friedrichshafen AG

(57) **Zusammenfassung**

Die Erfindung betrifft eine Baugruppe, zur Verwendung im Antriebsstrang einer Windkraftanlage, mit einem Generator (101), einem Getriebe (103) und einem Modul, wobei das Modul eine Welle (119) oder Nabe, eine Lageranordnung (111) und eine Stützstruktur (115) aufweist, wobei die Welle (119) oder Nabe mittels der Lageranordnung (111) drehbar in der Stützstruktur (111) gelagert ist, wobei die Welle (119) oder Nabe drehfest mit einer Welle des Getriebes (103) verbindbar ist; wobei die Welle (119) oder Nabe und ein Rotor (107) des Generators (101) miteinander fügbar sind. Die Stützstruktur (115) bildet einstückig mindestens einen Lagerring der Lageranordnung (111) aus.

## Beschreibung

Die Erfindung betrifft eine Baugruppe nach dem Oberbegriff von Anspruch 1.

Eine solche Baugruppe ist aus der Druckschrift EP 3 117 099 A1 bekannt. Dort ist eine Stützstruktur offenbart, die als Lagersitz dient. Die Stützstruktur und ein entsprechendes Lager sind als separate Teile ausgeführt. Dies erhöht die Fertigungs- und Montagekosten.

Der Erfindung liegt die Aufgabe zugrunde, die Fertigungs- und Montagekosten eines modular mit einem Generator gekoppelten Windkraftgetriebes zu senken.

Diese Aufgabe wird gelöst durch eine Baugruppe nach Anspruch 1. Bevorzugte Weiterbildungen sind in den Unteransprüchen enthalten.

Die Baugruppe ist zur Verwendung im Antriebsstrang einer Windkraftanlage ausgebildet. Sie umfasst ein Getriebe, einen Generator und ein Modul.

Ein Modul ist eine Baugruppe, d.h. eine Gesamtheit von Unterbaugruppen und/oder Bauteilen, mit definierten Schnittstellen. Das Modul weist vorliegend eine Welle oder Nabe, eine Lageranordnung und eine Stützstruktur auf. Die Welle oder Nabe ist mittels der Lageranordnung drehbar in der Stützstruktur gelagert.

Das Modul weist Schnittstellen zu einer Welle des Getriebes und einem Rotor des Generators auf. Entsprechend ist die Welle oder Nabe drehfest mit der Welle des Getriebes verbindbar. Weiterhin ist die Welle oder Nabe mit dem Rotor fügbar. Die Fügeverbindung zwischen der Welle oder Nabe und dem Rotor ist drehfest und zudem derart beschaffen, dass der Rotor radial von der Welle oder Nabe gestützt wird.

Zwei miteinander gefügte Bauteile sind durch Anwendung eines Fügeverfahrens miteinander verbunden. Die Fügeverfahren sind in DIN 8593 definiert.

Eine weitere Schnittstelle des Moduls kann zwischen der Stützstruktur und einem Gehäuse des Getriebes oder des Generators bestehen. In dem Fall sind auch die Stützstruktur und das Gehäuse miteinander fügbar. Die Stützstruktur bildet dann einen Teil des Gehäuses. Dies bedeutet, dass die Stützstruktur zusammen mit weiteren Teilen des Gehäuses einen Innenraum des Getriebes oder des Generators kapselt. In dem Innenraum kann Öl enthalten sein. Entsprechend ist die Kapselung bevorzugt öldicht ausgeführt.

Erfindungsgemäß sind mindestens ein Lagerring der Lageranordnung und die Stützstruktur einstückig miteinander verbunden. Die Stützstruktur bildet also einstückig den Lagerring aus. Bei dem Lagerring handelt es sich bevorzugt um einen Außenring. Ein Außenring zeichnet sich dadurch aus, dass er bezüglich eines weiteren Lagerrings - Innenring - radial weiter außerhalb angeordnet ist und mit diesem ein Laufflächenpaar bildet.

Ein Lagerring ist eine Komponente eines Lagers, die eine Lauffläche ausbildet. Dies impliziert, dass die Stützstruktur einstückig mindestens eine Lauffläche der Lageranordnung ausbildet.

Durch die Erfindung lassen sich Fertigungs- und Montageschritte sparen. Da der Lagerring einstückig in die Stützstruktur integriert ist, ist es nicht mehr erforderlich, Lagerringe in der Stützstruktur zu montieren.

In einer bevorzugten Weiterbildung ist die Welle oder Nabe ausschließlich mittels der Lageranordnung gelagert. Dies bedeutet, dass es keine Lager gibt, mit denen die Welle oder Nabe gelagert ist, die nicht Teil der Lageranordnung sind. Dadurch ergibt sich ein besonders kompakter Aufbau des Moduls.

Da die Welle oder Nabe und der Rotor miteinander gefügt sind, ist über die Welle oder Nabe auch der Rotor mittels der Lageranordnung drehbar in der Stützstruktur gelagert. Um den Aufbau noch kompakter zu gestalten, ist der Rotor in einer bevorzugten Weiterbildung ausschließlich mittels der Lageranordnung gelagert. Dies bedeutet, dass jedes Lager, mit dem der Rotor gelagert ist, zu der Lageranordnung gehört. Die Fügeverbindung zwischen dem Rotor und der Welle oder Nabe ist zu diesem Zweck bevorzugt starr ausgeführt, d.h. lässt keinerlei Relativbewegungen zwischen der Welle oder Nabe und dem Rotor zu.

In einer darüber hinaus bevorzugten Weiterbildung weist die Lageranordnung genau einen Außenring auf. Dies schließt Ausführungsformen mit ein, bei denen ein einstückig ausgeführter Außenring mehrere Laufflächen ausbildet.

Ein Laufflächenpaar besteht aus zwei Laufflächen, die relativ zueinander um eine Drehachse der Lageranordnung verdrehbar sind und sich axial und/oder radial gegeneinander abstützen. Bei einem Wälzlager befinden sich Wälzkörper zwischen den Laufflächen und rollen auf den Laufflächen ab. Bei einem Gleitlager bilden die Laufflächen einen Lagerspalt, der gewöhnlich mit Schmierstoff gefüllt ist.

Die Lageranordnung weist in einer bevorzugten Weiterbildung mindestens zwei Laufflächenpaare auf, die in O-Anordnung ausgerichtet sind.

In einer darüber hinaus bevorzugten Weiterbildung weist die Lageranordnung genau zwei Laufflächenpaare auf.

Der Lagerring weist bevorzugt genau zwei Laufflächen auf. In einer bevorzugten Weiterbildung bildet er jeweils eine Lauffläche der Laufflächenpaare aus.

Das Modul ist bevorzugt mit einer Abdeckung weitergebildet. Diese und die Stützstruktur sind miteinander gefügt. Weiterhin bildet die Abdeckung ein Loch, durch das die Welle oder Nabe hindurchverläuft.

Die Abdeckung ist in einer bevorzugten Weiterbildung entlang des Lochs bzw. entlang eines Rands des Lochs fluiddicht, insbesondere schmierstoffdicht gegenüber der Welle oder Nabe abgedichtet.

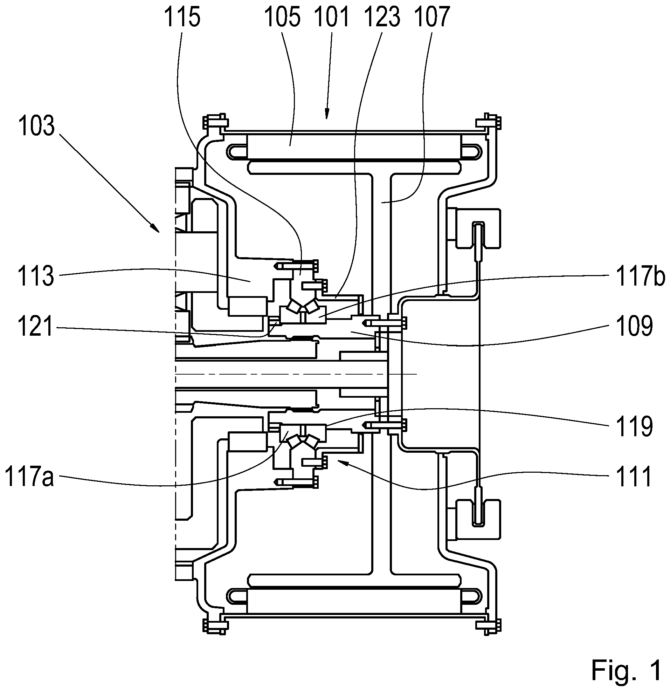

Ein bevorzugtes Ausführungsbeispiel ist in Fig. 1 dargestellt. Im Einzelnen zeigt: Fig. 1 eine integrierte Getriebe-Generator-Anordnung.

In Fig. 1 ist ein Generator 101 und ein generatorseitiger Teil eines Getriebes 103 abgebildet. Der Generator 101 weist einen Stator 105 und einen Rotor 107 auf. Der Rotor 107 ist mit einer Zwischenwelle 109 verschraubt. Er wird ausschließlich von der Zwischenwelle 109 getragen.

Die Zwischenwelle 109 wiederum ist mittels einer Lageranordnung 111 drehbar in einer Gehäusestruktur 113 gelagert. Neben der Lageranordnung 111 gibt es keine weiteren Lager für die Zwischenwelle 109.

Die Lageranordnung 111 ist als doppeltes Kegelrollenlager in O-Anordnung ausgeführt. Sie umfasst einen einstückig ausgeführten Außenring 115 und genau zwei Innenringe 117a, 117b. Die Innenringe 117a, 117b bilden mit dem Außenring 115 jeweils ein Laufflächenpaar.

Der Außenring 115 ist in der Gehäusestruktur 113 verschraubt.

Die Zwischenwelle 109 verläuft in axialer Richtung durch die Innenringe 117a, 117b hindurch. Die Fixierung der Innenringe 117a, 117b auf der Zwischenwelle 109 erfolgt zwischen einem von der Zwischenwelle 109 ausgebildeten Absatz 119 und einer auf die Zwischenwelle 109 aufgeschraubten Spannmutter 121.

Die Gehäusestruktur 113 bildet eine Trennwand zwischen einem Innenraum des Generators 101 und einem Innenraum des Getriebes 103. Teil dieser Trennwand ist auch der äußere Lagerring 115. Entsprechend trennt der Lagerring 115 das Innere des Generators 101 von dem Inneren des Getriebes 103 ab. Dabei grenzt der äußere Lagerring 115 unmittelbar an das Innere des Generators 101 und das Innere des Getriebes 103 an.

Die Trennwand zwischen dem Inneren des Generators 101 und dem Inneren des Getriebes 103 setzt sich fort in einer Abdeckung 123. Diese ist mit dem äußeren Lagerring 115 verschraubt und erstreckt sich zwischen dem äußeren Lagerring 115 und der Zwischenwelle 109. Zu der Zwischenwelle 109 ist die Abdeckung 123 mittels einer Dichtung fluiddicht ausgeführt. Auf diese Weise bildet die Zwischenwand eine fluiddichte Barriere zwischen dem Inneren des Generators 101 und dem Inneren des Getriebes 103.

### Bezuqszeichen

- 101: Generator
- 103: Getriebe
- 105: Stator
- 107: Rotor
- 109: Zwischenwelle
- 111: Lageranordnung
- 113: Gehäusestruktur
- 115: Außenring
- 117a, 117b: Innenringe
- 119: Zwischenwelle
- 121: Spannmutter
- 123: Abdeckung

## Patentansprüche

1. Baugruppe, zur Verwendung im Antriebsstrang einer Windkraftanlage, mit einem Generator (101), einem Getriebe (103) und einem Modul, wobei
das Modul eine Welle (119) oder Nabe, eine Lageranordnung (111) und eine Stützstruktur (115) aufweist, wobei
die Welle (119) oder Nabe mittels der Lageranordnung (111) drehbar in der Stützstruktur (111) gelagert ist, wobei
die Welle (119) oder Nabe drehfest mit einer Welle des Getriebes (103) verbindbar ist; und wobei
die Welle (119) oder Nabe und ein Rotor (107) des Generators (101) miteinander fügbar sind; **dadurch gekennzeichnet, dass**
die Stützstruktur (115) einstückig mindestens einen Lagerring der Lageranordnung (111) ausbildet.

2. Baugruppe nach Anspruch 1; **dadurch gekennzeichnet**, das
die Welle (109) oder Nabe ausschließlich mittels der Lageranordnung (111) gelagert ist.

3. Baugruppe nach einem der vorhergehenden Ansprüche; **dadurch gekennzeichnet, dass**
der Rotor (107) ausschließlich mittels der Lageranordnung (111) gelagert ist.

4. Baugruppe nach einem der vorhergehenden Ansprüche; **dadurch gekennzeichnet, dass**
der Lagerring (115) als Außenring ausgeführt ist; wobei
die Lageranordnung (111) genau einen Außenring aufweist.

5. Baugruppe nach einem der vorhergehenden Ansprüche; **dadurch gekennzeichnet, dass**
die Lageranordnung (111) mindestens zwei Laufflächenpaare in O-Anordnung aufweist.

6. Baugruppe nach dem vorhergehenden Anspruch; **dadurch gekennzeichnet, dass** die Lageranordnung (11) genau zwei Laufflächenpaare aufweist.

7. Baugruppe nach einem der vorhergehenden zwei Ansprüche;
der Lagerring (115) jeweils eine Lauffläche der Laufflächenpaare ausbildet.

8. Baugruppe nach einem der vorhergehenden Ansprüche; **dadurch gekennzeichnet, dass**
das Modul eine Abdeckung (123) aufweist; wobei
die Abdeckung (123) und die Stützstruktur (111) miteinander gefügt sind; und wobei
die Abdeckung (123) ein Loch bildet, durch das die Welle (109) oder Nabe hindurch verläuft.

9. Baugruppe nach dem vorhergehenden Anspruch; **dadurch gekennzeichnet, dass** die Abdeckung (123) entlang des Lochs fluiddicht gegenüber der Welle (109) oder Nabe abgedichtet ist.
